# EUROPEAN PATENT APPLICATION

(11) **EP 4 443 615 A1**
(43) Date of publication of application: **09.10.2024**
(21) Application number: 23216351.9
(22) Date of filing: 13.12.2023
(51) Int. Cl.: H01M 50/15, H01M 50/176, H01M 50/184, H01M 50/188, H01M 50/528, H01M 50/55, H01M 50/555, H01M 50/557, H01M 50/562, H01M 50/566, H01M 50/567

(54) **TOP COVER OF BATTERY**

(30) Priority: 07.04.2023 CN 202320771834 U
(71) Applicant: AESC Japan Ltd., Yokohama-Shi, Kanagawa 220-0012 (JP)
(72) Inventor: CHE, Peipei, Jiangyin City, Wuxi City, 214443 (CN)
(74) Representative: Becker, Eberhard

(57) **Abstract**

A top cover (100) of a battery is provided. The top cover (100) includes a top cover plate (1), an electrode draw-out member (2) and an external conductive member (3). The electrode draw-out member (2) and the external conductive member (3) are electrically connected, and the external conductive member (3) is disposed on one side of the top cover plate (1). The external conductive member (3) includes a first metal layer (31) and a second metal layer (32). A plug portion (311) protruding toward the second metal layer (32) is disposed on the first metal layer (31). A matching portion (321) that matches with the plug potion (311) is disposed on the second metal layer (32). The first metal layer (31) and the second metal layer (32) are matched and connected through the plug portion (311) and the matching portion (321).

## Description

### BACKGROUND

### Technical Field

The disclosure relates to the field of batteries, and in particular to a top cover, a battery including the same and an electronic device.

### Description of Related Art

At present, a top cover of a square-shaped battery generally adopts a butterfly welding assembly structure. An external conductive terminal and an electrode pillar (electrode draw-out member) are respectively provided on the upper and lower sides of the top cover plate. The electrode pillar extends from the through hole opened on the surface of the top cover plate and is welded to an external conductive member. Currently, in order to ensure that the external conductive member located on the top cover plate is welded to the aluminum electrode pillar while being also welded to the external copper wires, the external conductive terminal is normally manufactured by adopting copper-aluminum composite plates or friction welding of copper plates and aluminum plates.

The solution of using copper-aluminum composite plates to manufacture external conductive member costs more in terms of raw material, the process is complicated, material utilization is low during production, and copper plate utilization is low as well. The solution of using friction welding of copper plates and aluminum plates to manufacture external conductive member also involves a complex welding process and requires a large amount of machining, resulting in low material utilization and extremely high costs.

### SUMMARY

The technical problem to be solved by the disclosure is to overcome the defects in the related art in which manufacturing external conductive members involves a lot of processing difficulties and high processing costs, and the technical solution is to provide a top cover, a battery including the same and an electronic device.

The disclosure solves the above technical problems through the following technical solutions.

A top cover includes a top cover plate, an electrode draw-out member, and an external conductive member. The electrode draw-out member is electrically connected to the external conductive member. The external conductive member is disposed on one side of the top cover plate away from the electrode assembly. The external conductive member includes a first metal layer and a second metal layer, and a plug portion protruding toward the second metal layer is disposed on the first metal layer. A matching portion that matches with the plug portion is disposed on the second metal layer. The first metal layer and the second metal layer are matched and connected through the plug portion and the matching portion. By providing a protruding portion on the first metal layer and a recessed portion matching the protruding portion on the second metal layer, the connection between the first metal layer and the second metal layer of the external conductive member is achieved by using the protruding portion and the recessed portion that are matched and connected to each other. Compared with the existing technology, the disclosure makes it possible to realize the connection effect of two metals while effectively reducing processing difficulty, costs of raw materials and process costs. In the meantime, the solution also makes it possible to realize the connection effect of the first metal layer and the second metal layer using the same metal while reducing processing difficulty, costs of raw materials and process costs.

Preferably, the plug portion is a protrusion protruding from the first metal layer, and the matching portion is a through hole penetrating the second metal layer.

Through the above structural arrangement, the difficulty of matching the plug portion and the matching portion may be reduced. In the meantime, designing the matching portion as a penetrated through hole makes the formed matching structure more reliable.

Preferably, the matching portion is a stepped through hole including a first through hole and a second through hole. Along the insertion direction of the plug portion, the projection of the first through hole is located within the projection area of the second through hole. The peripheral surface of the plug portion accommodated in the matching portion matches with the shape of the hole wall of the matching portion.

By changing the cross-sectional shape of the stepped through hole of the matching portion from small to large along the insertion direction of the plug portion, the connection strength when matching with the plug portion may be improved.

Preferably, along the insertion direction of the plug portion, a cross-section of the second through hole gradually changes in size from small to large; or, the second through hole is a through hole with an unchanged cross-section in size.

By gradually changing the size of cross-section of the second through hole from small to large, it is convenient for the material at the end of the protruding portion to be better filled in the recessed portion when the protruding portion and the recessed portion are matched and connected through material deformation processes such as riveting and stamping, thereby improving the connection effect between the first metal layer and the second metal layer.

By designing the second through hole as a through hole with an unchanged cross-section in size, compared with the shape of other concave platforms, a higher tensile strength when connected and matched with the protruding portion may be achieved, and the connection effect is better.

Preferably, along the insertion direction of the plug portion, the terminal end of the plug portion is aligned with the penetration position of the matching portion on the second metal layer; or, along the insertion direction of the plug portion, the terminal end of the plug portion is completely accommodated in the through hole of the second metal layer; or, along the insertion direction of the plug portion, the terminal end of the plug portion protrudes from the through hole of the second metal layer, and at least part of the size of the terminal end is larger than the diameter of the through hole.

By making the terminal end of the plug portion to be aligned with the penetration position of the matching portion, it is possible to facilitate the matching and connection between the first metal layer and the second metal layer, and the connection process is simpler.

By making the terminal end of the plug portion to be completely accommodated in the through hole of the second metal layer, the connection strength of the plug portion relative to the matching portion is improved.

The connection effect between the first metal layer and the second metal layer may be improved by making the terminal end of the plug portion protrude from the through hole of the second metal layer, and making at least part of the size of the terminal end to be larger than the diameter of the through hole. In the meantime, with the extension of the plug portion, it is possible to make a concave-convex structure to exist on the surface of the second metal layer. When the external conductive member is subsequently wrapped and fixed by the injection molding process, the concave-convex structure existing on the surface of the second metal layer is adopted to match with the injection-molded insulation portion, so as to realize a more reliable connection and to prevent the external conductive member from rotating relative to the injection-molded insulation portion.

Preferably, the top cover further includes an insulating support portion, the insulating support portion has an accommodating cavity, and the second metal layer is at least partially accommodated in the accommodating cavity; a rotation stopping portion is disposed on one side of the insulating support portion facing the second metal layer; the rotation stopping portion extends into the through hole of the second metal layer to stop the external conductive member from rotating relative to the insulating support portion; or, the terminal end of the plug portion extending from the through hole of the second metal layer extends into the rotation stopping portion to prevent the external conductive member from rotating relative to the insulating support portion.

By making the rotation stopping portion of the insulating support portion to extend into the through hole of the second metal layer, or by making the terminal end of the plug portion to extend into the rotation stopping portion of the insulating support portion through the through hole of the second metal layer, it is possible to realize matching and connection between the external conductive member relative to the insulating support portion, so as to prevent the external conductive member from rotating relative to the insulating support portion.

Preferably, the first metal layer and the plug portion are integrally formed.

By integrally forming the first metal layer and the plug portion, it is possible to facilitate processing and molding, and the connection strength of the plug portion relative to the matching portion may be improved.

Preferably, a mounting portion is disposed on the first metal layer, the mounting portion includes a stepped through hole including a third through hole and a fourth through hole. The fourth through hole communicates with the matching portion. Along the insertion direction of the plug portion, the projection of the fourth through hole is located within the projection area of the third through hole, and the peripheral surface of the plug portion accommodated in the mounting portion matches with the shape of the hole wall of the mounting portion.

By disposing the mounting portion on the first metal layer, the plug portion is accommodated and limited through the stepped through hole, thereby providing a more preferred structural arrangement solution. By using the assembly and configuration of the plug portion relative to the mounting portion on the first metal layer, the matching and connection between the first metal portion and the second metal portion is further achieved. This structural arrangement also facilitates the replacement of the plug portion relative to the first metal portion.

Preferably, the thickness of the first metal layer is greater than the thickness of the second metal layer; and/or, along the insertion direction of the plug portion, the projection of the second metal layer is located within the projection area of the first metal layer.

Since the material density and cost of copper are greater than that of aluminum, by setting the thickness of the first metal layer made of aluminum to be greater than the thickness of the second metal layer made of copper, the material cost and weight of the external conductive member may be further reduced.

In the meantime, by making the outer dimensions of the first metal layer made of aluminum to be larger than the outer dimensions of the second metal layer made of copper, the material cost and weight of the external conductive member may be further reduced.

Preferably, at least part of the projection shape of the plug portion on the top cover plate is one of a circle, a square, a rectangle, a rhombus, and a trapezoid.

Setting the plug portion into a circle facilitates processing and forming; setting the plug portion into one of square, rectangular, rhombus, and trapezoid helps to improve the strength of the matching and connection between the plug portion and the matching portion.

Preferably, a rounded corner is disposed at the edge of the plug portion.

In this way, it is convenient to perform processing, avoids local stress when performing matching and connecting, and prevent the edge of the plug portion from scratching the surface of other components when matching and connecting with the matching portion.

Preferably, the top cover includes an insulating support portion disposed between the second metal layer and the top cover plate, and the second metal layer is disposed between the insulating support portion and the first metal layer; a draw-out hole is disposed on the second metal layer, the end portion of the electrode draw-out member has a draw-out portion that matches with the draw-out hole, the second metal layer and the electrode draw-out member are matched and connected through the draw-out hole and the draw-out portion.

Through the matching and connection between the draw-out hole and the draw-out portion, the connection reliability of the second metal layer of the external conductive member relative to the electrode draw-out member is improved.

Preferably, a hollow portion is disposed on the first metal layer at a position corresponding to the draw-out hole of the second metal layer, and the size of the hollow portion is larger than the diameter of the draw-out hole.

The first metal layer is provided with a hollow portion to avoid the connection between the second metal layer and the electrode draw-out member, making it easier to perform matching and connection as well as subsequent welding process. In the meantime, providing a hollow portion on the first metal layer may further reduce weight.

Preferably, a diameter or a side length of the projection of the plug portion on the top cover plate is between 0.5 mm and 6 mm; the protruding height of the plug portion on the surface of the first metal layer is between 0.2 mm and 4 mm.

Preferably, the first metal layer and the second metal layer are made of different materials, and the second metal layer and the electrode draw-out member are made of the same metal material.

Preferably, the material of the first metal layer is aluminum, and the material of the second metal layer is copper.

By manufacturing the first metal layer provided with the plug portion through aluminum and manufacturing the second metal layer provided with the matching portion through copper, the aluminum plug portion is extended into the copper matching portion for matching connection, so that when the thickness of the first metal layer and the second metal layer remains unchanged, the overall weight of the external conductive member may be reduced, thereby reducing weight and increasing the energy density of the battery.

Preferably, the number of plug portions is multiple, and the plurality of plug portions are evenly distributed on the surface of the first metal layer.

By disposing multiple plug portions, the connection effect between the first metal layer and the second metal layer is improved. Furthermore, by distributing multiple plug portions evenly on the surface of the first metal layer, the uniformity of connection between the first metal layer and the second metal layer is ensured, and damage caused by local force is avoided.

Preferably, the first metal layer and the second metal layer are connected by welding.

The first metal layer and the second metal layer of the external conductive member are further connected through a welding process on the basis of matching and connection of the plug portion and the matching portion, so as to further increase the contact area of the first metal layer and the second metal layer, thus improving current-carrying capability. In the meantime, the connection reliability between the first metal layer and the second metal layer is ensured.

Preferably, the first metal layer and the second metal layer are welded and connected using a brazing process.

The brazing process is less expensive than other welding processes. In the meantime, the first metal layer and the second metal are connected and matched through the plug portion and the matching portion, which realizes the pre-positioning of the first metal layer and the second metal before welding, and also facilitates the implementation of the subsequent brazing process and reduces difficulty in brazing.

A battery includes: a housing; the top cover as described above, the top cover is disposed on the housing and defines an accommodating cavity together with the housing; a battery core accommodated in the accommodating cavity, and an electrode assembly is connected to the battery core.

An electronic device includes the battery as described above.

The positive progressive effects of this disclosure are: the disclosure provides a top cover, a battery including the same and an electronic device, by disposing a plug portion on the first metal layer of the top cover, and disposing a matching portion matching the plug portion on the second metal layer, the connection between the first metal layer and the second metal layer of the external conductive member is realized through the matching and connection between the plug portion and the matching portion. Compared with the existing technology, the connection effect between the two metals is achieved while the processing difficulty, the costs of raw materials, and the processing cost are effectively reduced.

### BRIEF DESCRIPTION OF THE DRAWINGS

FIG. 1 is a schematic structural view of a top cover according to Embodiment 1 of the present disclosure.
FIG. 2 is a cross-sectional view along line A-A in FIG. 1.
FIG. 3 is a partial enlarged view of part B in FIG. 2.
FIG. 4 is a schematic view of an exploded structure of the external conductive member according to Embodiment 1 of the present disclosure.
FIG. 5 is a schematic structural view of a second metal layer according to Embodiment 1 of the present disclosure.
FIG. 6 is a schematic view of an internal structure of an external conductive member according to Embodiment 2 of the present disclosure.
FIG. 7 is a schematic view of an exploded structure of the external conductive member according to Embodiment 2 of the present disclosure.
FIG. 8 is a schematic view of an internal structure of an external conductive member according to Embodiment 3 of the present disclosure.
FIG. 9 is a schematic view of an exploded structure of the external conductive member according to Embodiment 3 of the present disclosure.
FIG. 10 is a schematic structural view of a second metal layer according to Embodiment 3 of the present disclosure.
FIG. 11 is a schematic structural view of an external conductive member and an upper injection-molded member according to Embodiment 4 of the present disclosure.
FIG. 12 is a schematic view of an internal structure of an external conductive member according to Embodiment 5 of the present disclosure.
FIG. 13 is a schematic view of an exploded structure of an external conductive member according to Embodiment 5 of the present disclosure.

### BRIEF DESCRIPTION OF THE EMBODIMENTS

Preferred embodiments of the present disclosure are provided below with a more clear and complete description with reference to the accompanying drawings.

### Embodiment 1

This embodiment provides an electronic device. The electronic device includes a battery. The battery includes a housing, a top cover 100 and a battery core. The top cover 100 covers the top of the housing, and defines an accommodating cavity together with the housing. The battery core is accommodated in the accommodating cavity, and the battery core is connected with an electrode assembly, which is electrically connected to the electrode draw-out member 2 in the top cover 100.

The electronic device includes, but is not limited to: notebook computers, pen computers, mobile computers, e-book players, portable telephones, portable fax machines, portable copiers, portable printers, stereo headsets, video recorders, LCD televisions, portable cleaners, portable CD players, mini discs, transceivers, electronic notepads, calculators, memory cards, portable recorders, radios, backup power supplies, motors, cars, motorcycles, power-assisted bicycles, bicycles, lighting equipment, toys, game consoles , clocks, power tools, flashlights, cameras, large household batteries, energy storage or sodium ion capacitors, etc.

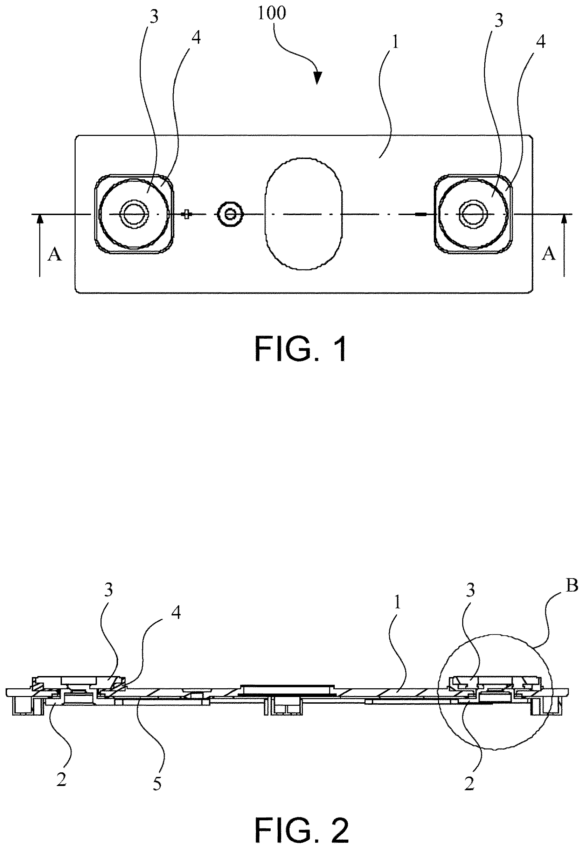

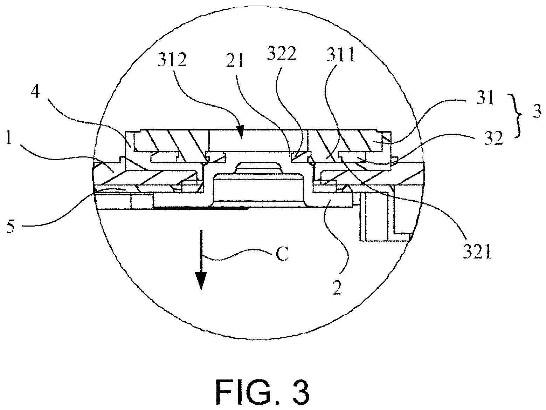

FIG. 1, FIG. 2 and FIG. 3 are a top cover 100 provided by the present disclosure, which specifically includes a top cover plate 1, an electrode draw-out member 2 and an external conductive member 3. As shown in FIG. 2 and FIG. 3, there are two sets of electrode draw-out member 2 and external conductive member 3 disposed on each of the top cover plates 1, respectively forming the positive electrode and negative electrode of the top cover 100. As shown in FIG. 3, taking the position of the negative electrode of the top cover 100 as an example: the electrode draw-out member 2 passes through the top plate from the bottom to the top and is electrically connected to the external conductive member 3. In the meantime, the external conductive member 3 is disposed on the top surface of the top cover plate 1, the external conductive member 3 and the top cover plate 1 are separated by the upper injection-molded member 4 to achieve insulation. A concave accommodating cavity is disposed on the upper surface of the upper injection-molded member 4 for partially accommodating the external conductive member 3, so as to achieve reliable connection with external conductive member 3. The electrode draw-out member 2 and the top cover plate 1 are separated by the lower injection-molded member 5 to achieve insulation. In this embodiment, the upper injection-molded member 4 for insulating the external conductive member 3 from the top cover plate 1 and the lower injection-molded member 5 for insulating the electrode draw-out member 2 from the top cover plate 1 are both formed by the injection molding process. Of course, in other embodiments, other processes such as pre-processing and molding may also be adopted to form an insulating support structure that separates the external conductive member 3 from the top cover plate 1 and separates the electrode draw-out member 2 from the top cover plate 1 to achieve the purposes of support connection and insulation.

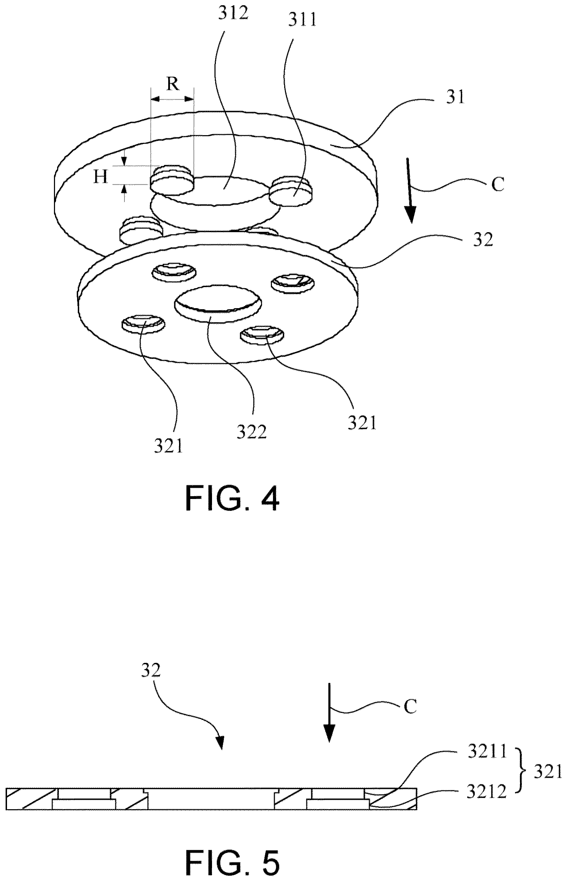

As specifically shown in FIG. 3 and FIG. 4, the external conductive member 3 in this embodiment includes a first metal layer 31 and a second metal layer 32 stacked together. The first metal layer 31 is made of aluminum, and the second metal layer 32 is made of copper, and is disposed for welding with the electrode draw-out member 2, which is also made of copper. A plug portion 311 protruding toward the second metal layer 32 is disposed on the surface of the first metal layer 31, and a matching portion 321 that matches with the plug portion 311 is disposed on the surface of the second metal layer 32. The first metal layer 31 and the second metal layer 32 are matched and connected through the plug portion 311 and the matching portion 321 to achieve connection and contact between the two metal materials.

In this solution, by disposing a plug portion 311 on the first metal layer 31 and a matching portion 321 that matches with the plug portion 311 on the second metal layer 32, the matching and connection between the plug portion 311 and the matching portion 321 is utilized to realize the connection between the first metal layer 31 and the second metal layer 32 of the external conductive member 3. Compared with the existing technology, the connection effect between the two metals may be realized while the processing difficulty, costs for raw materials and process costs may be effectively reduced.

The material of the first metal layer 31 in this embodiment is aluminum, and the material of the second metal layer 32 is copper, which is only a specific implementation to be protected by the present disclosure. In other embodiments, the first metal layer 31 and the second metal layer 32 only need to adopt different metals as required, and the purpose of simple connection may also be achieved through the matching of the plug portion 311 and the matching portion 321. In this embodiment, the plug portion 311 is disposed on the first metal layer 31 made of aluminum, and the matching portion 321 is disposed on the second metal layer 32 made of copper, which may further produce more effects: since the density of aluminum is lower than that of copper, the aluminum plug portion 311 may be inserted into the copper matching portion 321 for matching and connection. When the thickness of the first metal layer 31 and the thickness of the second metal layer 32 remain unchanged, copper is replaced with aluminum in some positions so that the overall weight of the external conductive member 3 may be reduced, thus achieving reduction of weight and increasing the energy density of the battery.

Further, for the purpose of reducing weight and costs, in this embodiment, the thickness of the first metal layer 31 made of aluminum is greater than the thickness of the second metal layer 32 made of copper, and the diameter of the first metal layer 31 is also larger than that of the second metal layer 32 to reduce weight and costs.

Of course, in other embodiments, this solution of achieving reliable connection with lower costs through the cooperation of the plug portion 311 and the matching portion 321 is also adopted for the connection between the first metal layer 31 and the second metal layer 32 made of the same material.

In this embodiment, the first metal layer 31 and the second metal layer 32 are connected by riveting the plug portion 311 and the connection hole. Compared with other matching connection processes, the riveting process involves a simpler structure with a lower processing cost, so it is possible to further reduce the cost of manufacturing the external conductive member 3. On this basis, in order to improve the reliability of the external conductive member 3 during use, on the basis of the matching and connection between the first metal layer 31 and the second metal layer 32, the first metal layer 31 and the second metal layer 32 may be further reinforced through welding to further increase the contact area between the first metal layer 31 and the second metal layer 32 and improve the current-carrying capability. In the meantime, it is possible to ensure the connection reliability between the first metal layer 31 and the second metal layer 32. Since the first metal layer 31 and the second metal layer 32 in this embodiment are already connected through matching prior to welding, the main function of the welding process is to strengthen the connection relationship between the two metal layers and increase the contact area of the two metal layers as well as enhance current-carrying capability. The above purposes may be realized through brazing with a relatively low cost. Specifically, before the first metal layer 31 and the second metal layer 32 are matched and connected, solder is coated on the corresponding surfaces of the first metal layer 31 and the second metal layer 32. Thereafter, the first metal layer 31 and the second metal layer 32 are matched and connected through the plug portion 311 and the matching portion 321, followed by soldering to increase the connection strength and contact area between the first metal layer 31 and the second metal layer 32. Solder may also be coated on the plug portion 311 and the matching portion 321 to further increase the contact area after welding.

As specifically shown in FIG. 3 and FIG. 4, in this embodiment, the matching portion 321 penetrates the second metal layer 32 vertically, and specifically penetrates the through hole of the second metal layer 32 along the insertion direction C of the plug portion 311. Through this structural arrangement, the formed matching structure may be made more reliable. On basis of the above, it can be seen from FIG. 3 that along the insertion direction C of the plug portion 311, the matching portion 321 is a through hole whose cross-sectional shape increases from small to large, and the peripheral surface of the plug portion 311 matches with the shape of the hole wall of the matching portion 321 so as to further improve the connection strength when being matched with the plug portion 311.

As shown in FIG. 5, in this embodiment, along the insertion direction C of the plug portion 311, the matching portion 321 is a stepped through hole consisting of a first through hole 3211 and a second through hole 3212. The diameters of the first through hole 3211 and the second through hole 3212 are different, and the projection of the first through hole 3211 is located within the projection area of the second through hole 3212, so as to form a gap on the hole wall of the stepped through hole for the plug portion 311 to be embedded therein, thereby improving the tightness of the connection between the plug portion 311 and the matching portion 321. In this way, when the first metal layer 31 is subjected to an external force, the first metal layer 31 would not be easily detached from the second metal layer 32. Specifically, the second through hole 3212 located at the lowermost end of the matching portion 321 is a concave platform with an equal cross-section. With such structural arrangement, compared with the shapes of other concave platforms, a stronger tensile strength may be realized when connecting and matching with the plug portion 311, and a better connection effect may be achieved.

As specifically shown in FIG. 3 and FIG. 4, in this embodiment, the plug portion 311 extends into the through hole of the matching portion 321 from top to bottom, and the lower end of the plug portion 311 is aligned with the penetration position of the matching portion 321 on the second metal layer 32. Such structural arrangement facilitates the matching and positioning of the plug portion 311 and the matching portion 321, and making the connection process simpler when the first metal layer 31 and the second metal layer 32 are matched and connected.

As shown in FIG. 4, in this embodiment, four plug portions 311 are disposed on the first metal layer 31. These plug portions 311 are evenly distributed on the surface of the first metal layer 31 in the circumferential direction, and four corresponding matching portions 321 are disposed on the second metal layer 32 to accommodate the above-mentioned plug portion 311. By disposing multiple plug portions 311 and matching portions 321 for matching and connection, it is possible to increase the connection effect between the first metal layer 31 and the second metal layer 32. Furthermore, by evenly distributing these plug portions 311 on the surface of the first metal layer 31, the uniformity of connection between the first metal layer 31 and the second metal layer 32 may be ensured to avoid damage caused by local stress. Of course, in other embodiments, the number of plug portions 311 disposed on the first metal layer 31 may also be different to improve the matching and connection effect through the connection between the plurality of plug portions 311 and the second metal layer 32.

Further, as shown in FIG. 4, the projection shape of the plug portion 311 on the top cover plate 1 is circular to facilitate processing and molding, and to avoid local stress when being matched with the matching portion 321. In the meantime, the arc-shaped edge of the plug portion 311 may also prevent the surface of other components from being scratched.

The diameter R of the projection of the plug portion 311 on the top cover plate 1 preferably ranges from 0.5 mm to 6 mm. More preferably, the selection range of the diameter R is between 1 mm and 3 mm. The diameter R set to be 1 mm or more may ensure the connection effect, and the diameter R set to be 3 mm or less will not make the diameter of the plug portion 311 to be too large and affect the processing of components. In addition, the protruding height H of the plug portion 311 on the surface of the first metal layer 31 preferably ranges from 0.2 mm to 4 mm. More preferably, the selection range of the protruding height H is between 0.5 mm and 2 mm. The protruding height H selected to be 0.5 mm or more may ensure the connection effect, and the protruding height H selected to be 2 mm or less will not make the plug portion 311 to protrude too much and affect the processing of components.

Of course, in other embodiments, the shape of projection of the plug portion 311 on the top cover plate 1 is one of polygons such as square, rectangle, rhombus, trapezoid, or a combination of these polygons. On this basis, an angle R may be set at the edge of the plug portion 311 to avoid scratching the surface of other components. When the plug portion 311 is a polygon such as a square, a rectangle, a rhombus, or a trapezoid, the preferred value of the side length of the plug portion 311 is between 0.5 mm and 6 mm. More preferably, the selection range of the side length of the plug portion 311 is between 1 mm and 3 mm.

As shown in FIG. 3, in this embodiment, a draw-out hole 322 is disposed on the surface of the second metal layer 32, the top of the electrode draw-out member 2 protrudes upward, and a draw-out portion 21 that matches with the draw-out hole 322 is formed at the end portion, so that the second metal layer 32 and the electrode draw-out member 2 are matched and connected through the draw-out hole 322 and the draw-out portion 21. Such structural arrangement may increase the contact area of the second metal layer 32 of the external conductive member 3 relative to the electrode draw-out member 2, and allows pre-positioning before welding connection to ensure the reliability of the connection between the two. Furthermore, a hollow portion 312 is disposed on the first metal layer 31 at a position corresponding to the draw-out hole 322 of the second metal layer 32. The size of the hollow portion 312 is larger than the diameter of the draw-out hole 322 to avoid the connection between the second metal layer 32 and the electrode draw-out member 2 to facilitate matching and connection as well as implementation of subsequent welding process. In the meantime, providing the hollow portion 312 on the first metal layer 31 may further reduce weight. In this embodiment, the draw-out hole 322 is a round hole, so the hollow portion 312 is also configured as a circular hole coaxially arranged with the draw-out hole 322. The diameter of the hollow portion 312 is larger than the diameter of the draw-out hole 322 to ensure the avoidance effect.

### Embodiment 2

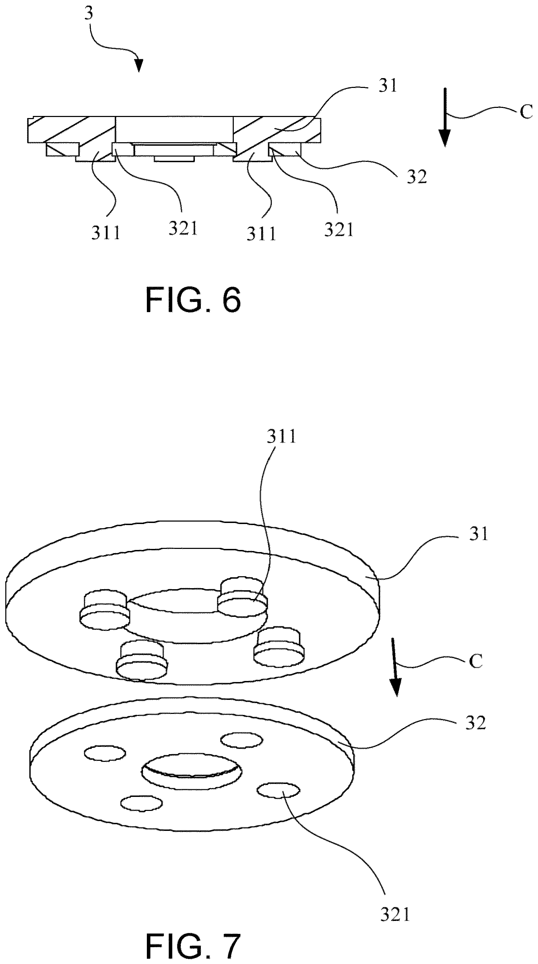

FIG. 6 and FIG. 7 are schematic structural diagrams of the external conductive member 3 provided in Embodiment 2 of the present disclosure. The structure of the external conductive member 3 in this embodiment is substantially the same as that in Embodiment 1, so only the structural differences between the present embodiment and the external conductive member 3 in Embodiment 1 will be described in detail.

As specifically shown in FIG. 6 and FIG. 7, in this embodiment, the matching portion 321 disposed on the second metal layer 32 is also a through hole that is penetrated from top to bottom, except that the through hole in this embodiment is a straight through hole instead of a stepped hole in Embodiment 1. On this basis, after extending into the corresponding matching portion 321, the plug portion 311 on the first metal layer 31 further extends from the penetration position of the matching portion 321 on the second metal layer 32, so that the terminal end of the plug portion 311 protrudes from the surface of the second metal layer 32. With such structural arrangement, it is possible to improve the connection effect between the first metal layer 31 and the second metal layer 32. In the meantime, by extending the plug portion 311 from the surface of the second metal layer 32, it is possible to make a concave-convex structure to exist on the surface of the second metal layer 32. When the external conductive member 3 is subsequently wrapped and fixed by the injection molding process, the concave-convex structure existing on the surface of the second metal layer 32 is adopted to match with the injection-molded insulation portion, so as to realize a more reliable connection and to prevent the external conductive member 3 from rotating relative to the injection-molded insulation portion.

In addition, the diameter of the portion of the plug portion 311 protruding from the surface of the second metal layer 32 is larger than the diameter of the through hole of the matching portion 321. Through such structural arrangement, the position-limiting capability for limiting the positions of the plug portion 311 and the matching portion 321 is improved. In order to make the diameter of the plug portion 311 protruding from the second metal layer 32 to be larger than the diameter of the through hole of the matching portion 321, the matching and connecting process of the two may be realized through riveting, stamping, etc.

### Embodiment 3

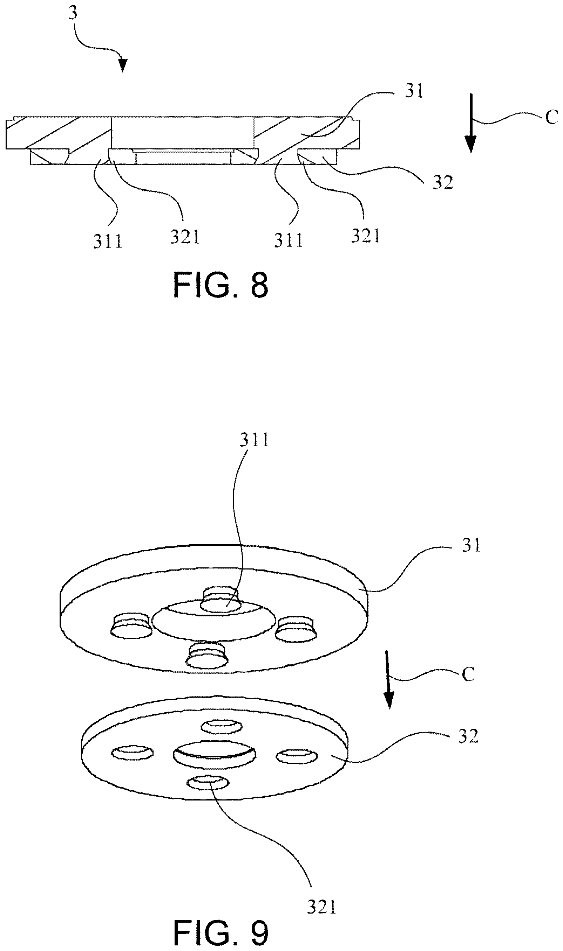

FIG. 8 and FIG. 9 are schematic structural diagrams of the external conductive member 3 provided in Embodiment 3 of the present disclosure. The structure of the external conductive member 3 in this embodiment is substantially the same as that in Embodiment 1, so only the structural differences between the present embodiment and the external conductive member 3 in Embodiment 1 will be described in detail.

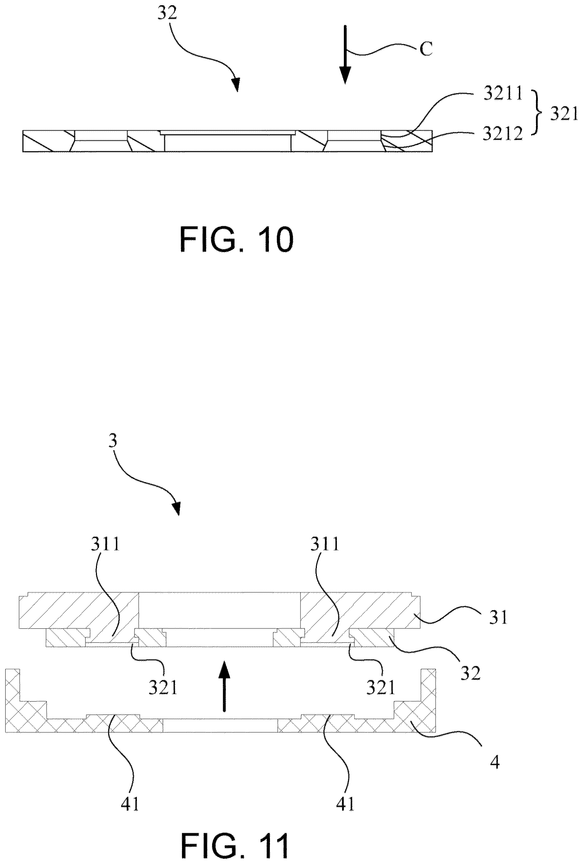

As specifically shown in FIG. 8 and FIG. 9, in this embodiment, the matching portion 321 disposed on the second metal layer 32 is also a through hole that is penetrated from top to bottom, and is also a stepped through hole consisting of a first through hole 3211 and a second through hole 3212. The difference between the present embodiment and Embodiment 1 is that in this embodiment, as shown in FIG. 10, the second through hole 3212 located at the lowermost end of the matching portion 321 is a through hole with a variable cross-section. Along the insertion direction C of the plug portion 311, the concave platform with a variable cross-section has a trumpet-like shape, and the shape of the cross-section thereof gradually changes from small to large. Through such structural arrangement, when the plug portion 311 and the matching portion 321 are matched and connected through material deformation processes such as riveting and stamping, the material at the terminal end of the plug portion 311 may be better filled in the terminal end of the matching portion 321 with the trumpet-like shape, thereby improving the connection effect of the first metal layer 31 and the second metal layer 32.

### Embodiment 4

FIG. 11 is a schematic structural diagram of the external conductive member 3 provided in Embodiment 4 of the present disclosure. The structure of the external conductive member 3 in this embodiment is substantially the same as that in Embodiment 1, so only the structural differences between the present embodiment and the external conductive member 3 in Embodiment 1 will be described in detail.

As specifically shown in FIG. 11, in this embodiment, the matching portion 321 disposed on the second metal layer 32 is also a through hole that is penetrated from top to bottom, and the plug portion 311 on the first metal layer 31 does not completely protrude from the matching portion 321, so there is a recess on the lower surface of the second metal layer 32. Therefore, a corresponding rotation stopping portion 41 is disposed on the surface of the upper injection-molded member 4 facing the second metal layer 32. By extending the rotation stopping portion 41 into the matching portion 321 of the second metal layer 32, it is possible to increase the connection and positioning effect of the upper injection-molded member 4 and the second metal layer 32 to better prevent the external conductive member 3 from rotating relative to the upper injection-molded member 4.

Of course, in other embodiments, the rotation stopping portion 41 located in the upper injection-molded member 4 may also be a concave recessed structure. In this case, the plug portion 311 on the first metal layer 31 may protrude from the surface of the second metal layer 32, through the matching between the plug portion 311 and the rotation stopping portion 41, it is possible to prevent the external conductive member 3 from rotating relative to the upper injection-molded member 4.

### Embodiment 5

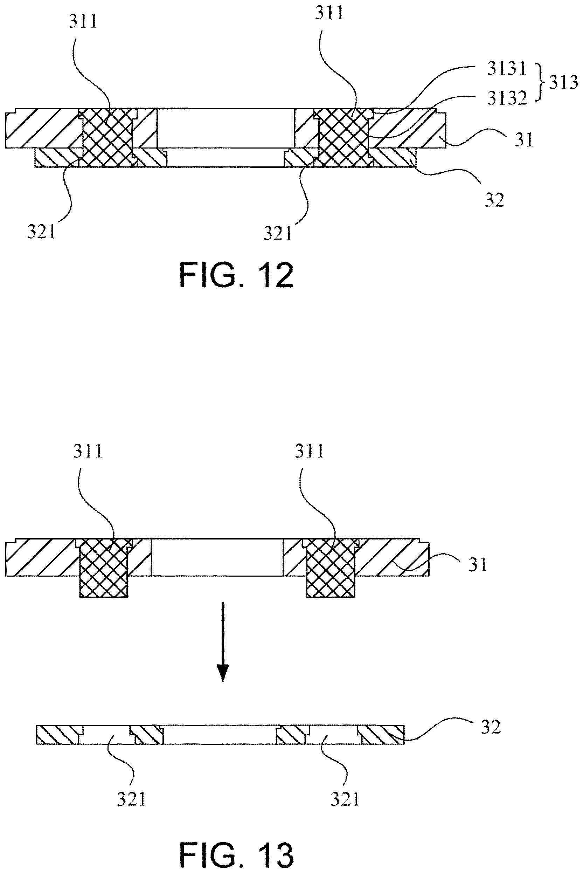

FIG. 12 and FIG. 13 are schematic structural diagrams of the external conductive member 3 provided in Embodiment 5 of the present disclosure. The structure of the external conductive member 3 in this embodiment is substantially the same as that in Embodiment 1, so only the structural differences between the present embodiment and the external conductive member 3 in Embodiment 1 will be described in detail.

Specifically, as shown in FIG. 12 and FIG. 13, in this embodiment, the first metal layer 31 and the plug portion 311 are not integrally formed, but have a relatively combined connection relationship. Specifically, as shown in FIG. 12, a vertically penetrating mounting portion 313 is disposed on the first metal layer 31 for accommodating the plug portion 311. In this embodiment, the mounting portion 313 is specifically a stepped through hole consisting of a third through hole 3131 and a fourth through hole 3132. The fourth through hole 3132 communicates with the third through hole 3131. Along the insertion direction of the plug portion 311, the projection of the fourth through hole 3132 is located within the projection area of the third through hole 3131, so that after the plug portion 311 is disposed downward to the mounting portion 313, by limiting the position of the plug portion 311 downward through the mounting portion 313, it is possible to stop the plug portion 311 from keeping moving downward.

Afterwards, as shown in FIG. 13, the first metal layer 31 is disposed downward to the second metal layer 32, and is riveted with the matching portion 321 of the second metal layer 32 through the plug portion 311, so that the plug portion 311 and the second metal layer 32 are also matched and connected to achieve reliable connection between the first metal layer 31 and the second metal layer 32 through the plug portion 311 that is independent of the first metal layer 31.

Such structural arrangement may facilitate the disassembly, assembly, and replacement of the plug portion 311, and there is no need to reprocess the first metal layer 31 when replacing the plug portion 311, and therefore making it possible to achieve a better structural versatility and maintainability.

## Claims

1. A top cover (100), **characterized by** comprising a top cover plate (1), an electrode draw-out member (2), and an external conductive member (3), wherein the electrode draw-out member (2) is electrically connected to the external conductive member (3), the external conductive member (3) is disposed on one side of the top cover plate (1) away from an electrode assembly, the external conductive member (3) comprises a first metal layer (31) and a second metal layer (32), and a plug portion (311) protruding toward the second metal layer (32) is disposed on the first metal layer (31), a matching portion (321) that matches with the plug portion (311) is disposed on the second metal layer (32), the first metal layer (31) and the second metal layer (32) are matched and connected through the plug portion (311) and the matching portion (321).

2. The top cover (100) according to claim 1, **characterized in that** the plug portion (311) is a protrusion protruding from the first metal layer (31), and the matching portion (321) is a through hole penetrating the second metal layer (32).

3. The top cover (100) according to claim 2, **characterized in that** the matching portion (321) is a stepped through hole comprising a first through hole (3211) and a second through hole (3212);
along an insertion direction of the plug portion (311), a projection of the first through hole (3211) is located within a projection area of the second through hole (3212), a peripheral surface of the plug portion (311) accommodated in the matching portion (321) matches with a shape of a hole wall of the matching portion (321).

4. The top cover (100) according to claim 3, **characterized in that** along the insertion direction of the plug portion (311), a cross-section of the second through hole (3212) gradually changes in size from small to large; or,
the second through hole (3212) is a through hole with an unchanged cross-section in size.

5. The top cover (100) according to claim 2, **characterized in that** along an insertion direction of the plug portion (311), a terminal end of the plug portion (311) is aligned with a penetration position of the matching portion (321) on the second metal layer (32), completely accommodated in the through hole of the second metal layer (32), or protrudes from the through hole of the second metal layer (32), and at least part of a size of the terminal end is larger than a diameter of the through hole.

6. The top cover (100) according to claim 5, **characterized in that** the top cover (100) further comprises an insulating support portion, the insulating support portion has an accommodating cavity, and the second metal layer (32) is at least partially accommodated in the accommodating cavity;
a rotation stopping portion (41) is disposed on one side of the insulating support portion facing the second metal layer (32);
the rotation stopping portion (41) extends into the through hole of the second metal layer (32) or the terminal end of the plug portion (311) extending from the through hole of the second metal layer (32) extends into the rotation stopping portion (41) to stop the external conductive member (3) from rotating relative to the insulating support portion.

7. The top cover (100) according to any one of claims 2-6, **characterized in that** a mounting portion (313) is disposed on the first metal layer (31), the mounting portion (313) comprises a stepped through hole comprising a third through hole (3131) and a fourth through hole (3132); the fourth through hole (3132) communicates with the matching portion (321); along an insertion direction of the plug portion (311), a projection of the fourth through hole (3132) is located within a projection area of the third through hole (3131), and the peripheral surface of the plug portion (311) accommodated in the mounting portion (313) matches with a shape of a hole wall of the mounting portion (313).

8. The top cover (100) according to claim 1, **characterized in that** a thickness of the first metal layer (31) is greater than a thickness of the second metal layer (32).

9. The top cover (100) according to claim 1, **characterized in that** along an insertion direction of the plug portion (311), a projection of the second metal layer (32) is located within a projection area of the first metal layer (31).

10. The top cover (100) according to claim 8, **characterized in that** a rounded corner is disposed at an edge of the plug portion (311).

11. The top cover (100) according to claim 1, **characterized in that** the top cover (100) further comprises an insulating support portion disposed between the second metal layer (32) and the top cover plate (1), and the second metal layer (32) is disposed between the insulating support portion and the first metal layer (31);
wherein a draw-out hole (322) is disposed on the second metal layer (32), an end portion of the electrode draw-out member (2) has a draw-out portion (21) that matches with the draw-out hole (322), the second metal layer (32) and the electrode draw-out member (2) are matched and connected through the draw-out hole (322) and the draw-out portion (21).

12. The top cover (100) according to claim 11, **characterized in that** a hollow portion (312) is disposed on the first metal layer (31) at a position corresponding to the draw-out hole (322) of the second metal layer (32), and a size of the hollow portion (312) is larger than a diameter of the draw-out hole (322).

13. The top cover (100) according to any one of claims 1-6 and 8-12, **characterized in that** the material of the first metal layer (31) is aluminum, and the material of the second metal layer (32) is copper, and the second metal layer (32) and the electrode draw-out member (2) are made of a same metal material.

14. The top cover (100) according to any one of claims 1-6 and 8-12, **characterized in that** a number of plug portions (311) is multiple, and the plurality of the plug portions (311) are evenly distributed on a surface of the first metal layer (31).

15. The top cover (100) according to any one of claims 1-6 and 8-12, **characterized in that** the first metal layer (31) and the second metal layer (32) are welded and connected using a brazing process.
